# EUROPEAN PATENT APPLICATION

(11) **EP 4 195 816 A1**
(43) Date of publication of application: **14.06.2023**
(21) Application number: 20948529.1
(22) Date of filing: 06.08.2020
(51) Int. Cl.: H04W 72/04, H04W 72/12

(54) **TERMINAL, BASE STATION DEVICE, AND RECEPTION METHOD**

(71) Applicant: NTT DOCOMO, INC., Chiyoda-Ku Tokyo 100-6150 (JP)
(72) Inventor: OKAMURA, Masaya, Tokyo 100-6150 (JP); OHARA, Tomoya, Tokyo 100-6150 (JP)
(74) Representative: Hoffmann Eitle
(86) International application number: PCT/JP2020/030276
(87) International publication number: WO 2022/029983

(57) **Abstract**

A terminal including: a reception unit configured to receive, from a base station apparatus, configuration information, indicating that scheduling is performed from a second cell to a first cell, of cross carrier scheduling for the first cell, wherein the reception unit monitors a PDCCH of the first cell and a PDCCH of the second cell.

## Description

### [Technical Field]

The present invention relates to a terminal and a base station apparatus in a wireless communication system.

### [Background Art]

In 3GPP (3rd Generation Partnership Project), a wireless communication system (hereinafter referred to as "NR") called 5G or NR (New Radio) is being studied in order to realize further increase of system capacity, further increase of data transmission speed, and further decrease of delay in the wireless section. In 5G, various wireless technologies and network architectures are being studied (e.g., Non-Patent Document 1) in order to achieve a throughput of 10 Gbps or higher and to satisfy the requirement that delay in the wireless section should be 1 ms or less.

Dynamic spectrum sharing (DSS) is being studied to ensure that LTE and NR coexist in the same band. Coexistence of different RATs (Radio Access Technology) in a single carrier allows flexible support of traffic demand at a period of system generation switching.

### [Prior art documents]

### [Non-patent document]

[Non-Patent Document 1] 3GPP TS 38. 300 V15. 9. 0 (2020-03)
[Non-Patent Document 2] 3GPP TS 38. 331 V15. 9. 0 (2020-03)
[Non-Patent Document 3] 3GPP TS 38. 213 V15. 9. 0 (2020-03)

### [Summary of Invention]

### [Problem to be solved by the invention]

In the current DSS specification, each of an LTE terminal and an NR terminal is configured with a resource for transmitting and receiving a control signal. The resource where the control signal can be placed is predefined and the systems are coexisted in a single carrier, thus, it is assumed that there will be insufficient resources for transmitting and receiving the control signals rather than each system being operated independently in different carriers.

In cross carrier scheduling in carrier aggregation, the prior art (e.g., Non-Patent Document 2) cannot schedule PDSCH reception or PUSCH transmission of a P(S)Cell (meaning of PCell or PSCell) from an SCell. Therefore, in order to schedule PDSCH reception or PUSCH transmission of a P(S)Cell, only PDCCH of a P(S)Cell is used, and resource utilization efficiency may be reduced.

Therefore, in the DSS where resources for transmitting and receiving control signals are expected to be insufficient, it is considered to schedule PDSCH reception or PUSCH transmission of a P(S)Cell by a PDCCH of an SCell in order to use resources efficiently.

However, when scheduling PDSCH reception or PUSCH transmission of a P(S)Cell by a PDCCH of an SCell, unless RRC reconfiguration is performed, PDSCH reception or PUSCH transmission of a P(S)Cell cannot be scheduled by a PDCCH of a P (S) Cell, and resource utilization efficiency may be reduced. Note that, this is a problem that arises when attempting to schedule PDSCH reception or PUSCH transmission of a P(S)Cell by a PDCCH of an SCell, not only when DSS is used.

The present invention has been made in view of the foregoing, and it is an object to provide a technique that enables easily switching cells that perform scheduling for a first cell between a first cell and a second cell.

### [Means for Solving Problems]

According to the disclosed technique, there is provided a terminal including: a reception unit configured to receive, from a base station apparatus, configuration information, indicating that scheduling is performed from a second cell to a first cell, of cross carrier scheduling for the first cell, wherein the reception unit monitors a PDCCH of the first cell and a PDCCH of the second cell

### [Effects of the Invention]

According to the disclosed technique, it becomes possible to easily switch cells that perform scheduling for a first cell between a first cell and a second cell.

### [Brief Description of Drawings]

[Fig.1] Fig. 1 is a diagram for explaining a wireless communication system according to an embodiment of the present invention;
[Fig.2] Fig. 2 is a diagram for explaining a wireless communication system according to an embodiment of the present invention;
[Fig.3] Fig. 3 is a diagram for explaining a basic operation of a wireless communication system according to an embodiment of the present invention;
[Fig.4] Fig. 4 is a diagram for explaining an example of scheduling;
[Fig.5] Fig. 5 is a diagram for explaining an example of scheduling;
[Fig.6] Fig. 6 is a diagram showing an example of a specification change;
[Fig.7] Fig. 7 is a diagram showing an example of a specification change;
[Fig.8] Fig. 8 is a diagram for explaining an example of a terminal's operation;
[Fig.9] Fig. 9 is a diagram for explaining an example of a terminal's operation;
[Fig.10] Fig. 10 is a diagram for explaining an example of a terminal's operation;
[Fig.11] Fig. 11 is a diagram for explaining an example of a terminal's operation;
[Fig. 12] Fig. 12 is a diagram for explaining an example of a terminal's operation;
[Fig.13] Fig. 13 is a diagram for explaining an example of a terminal's operation;
[Fig. 14] Fig. 14 is a diagram for explaining an example of a terminal's operation;
[Fig.15] Fig. 15 is a diagram for explaining an example of a terminal's operation;
[Fig.16] Fig. 16 shows an example of a functional configuration of the base station apparatus 10 according to an embodiment of the present invention;
[Fig.17] Fig. 17 is a diagram showing an example of a functional configuration of a user terminal 20 according to an embodiment of the present invention;
[Fig.18] Fig. 18 is a diagram illustrating an example of the hardware configuration of the base station apparatus 10 or the user terminal 20 according to an embodiment of the present invention.

### [Mode for Carrying Out the Invention]

Hereinafter, embodiments of the present invention will be described with reference to the drawings . The embodiments described below are examples, and the embodiments to which the present invention is applied are not limited to the following embodiments.

In operating a wireless communication system according to an embodiment of the present invention, existing techniques may be used as appropriate. The existing technology is, for example, an existing NR or LTE, but is not limited to an existing NR or LTE.

### (System Configuration)

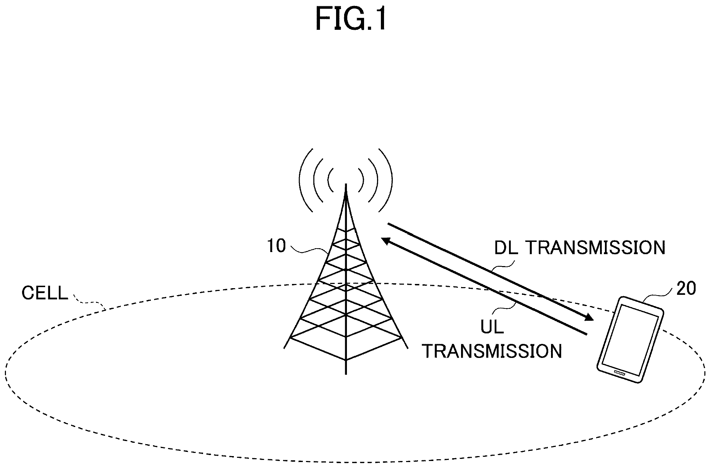

Fig. 1 is a diagram illustrating a wireless communication system according to an embodiment of the present invention. The wireless communication system in an embodiment of the present invention includes a base station apparatus 10 and a terminal 20, as shown in FIG. 1. In FIG. 1, one base station apparatus 10 and one terminal 20 are shown, but this is an example and a plurality of base station apparatuses 10 and a plurality of terminals 20 may be provided.

The base station apparatus 10 is a communication device that provides one or more cells and performs wireless communication with the terminal 20. The physical resources of the radio signal are defined in the time domain and the frequency domain, the time domain may be defined in OFDM symbols, and the frequency domain may be defined in subcarriers or resource blocks. TTI (Transmission Time Interval) in the time domain may be a slot, or TTI may be a subframe.

The base station apparatus 10 can provide carrier aggregation for communicating with the terminal 20 by aggregating a plurality of cells (a plurality of CCs (component carriers)) . Carrier aggregation uses one PCell (primary cell) and one or more SCells (secondary cells).

The base station apparatus 10 transmits synchronization signals and system information to the terminal 20. The synchronization signals are, for example, NR-PSS and NR-SSS. System information is transmitted, for example, by NR-PBCH or PDSCH, and is also called broadcast information. As shown in FIG. 1, the base station apparatus 10 transmits a control signal or data in DL (Downlink) to the terminal 20 and receives a control signal or data in UL (Uplink) from the terminal 20. Here, what is transmitted by a control channel such as PUCCH and PDCCH is called a control signal, and what is transmitted by a shared channel such as PUSCH and PDSCH is called data. This is an example.

The terminal 20 is a communication device with a wireless communication function, such as a smartphone, cellular phone, tablet, wearable terminal, and a communication module for M2M (Machine-to-Machine) . As shown in FIG. 1, the terminal 20 utilizes various communication services provided by a wireless communication system by receiving a control signal or data in DL from the base station apparatus 10 and transmitting a control signal or data in UL to the base station apparatus 10. The terminal 20 may be called a UE, and the base station apparatus 10 may be called a gNB.

The terminal 20 can provide carrier aggregation for communicating with the base station apparatus 10 by bundling a plurality of cells (a plurality of CCs (component carriers)) . Carrier aggregation uses one PCell (primary cell) and one or more SCells (secondary cells) . Also, PUCCH-SCell with PUCCH may be used.

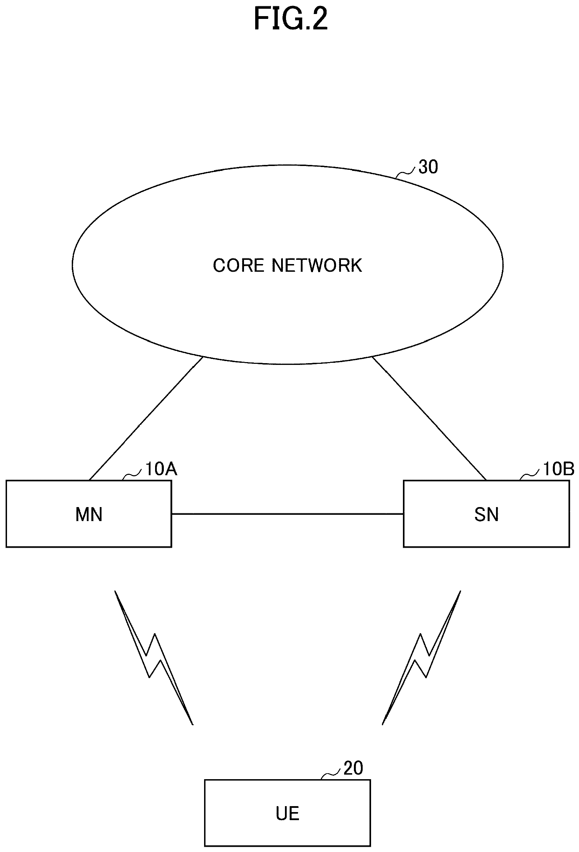

Fig. 2 shows an example of a configuration of a wireless communication system when DC (Dual connectivity) is executed. As shown in FIG. 2, a base station apparatus 10A serving as an MN (Master Node) and a base station apparatus 10B serving as an SN (Secondary Node) are provided. The base station apparatus 10A and the base station apparatus 10B are each connected to a core network. The terminal 20 can communicate with both the base station apparatus 10A and the base station apparatus 10B.

The cell group provided by the base station apparatus 10A that is an MN is called MCG (Master Cell Group), and the cell group provided by the base station apparatus 10B that is an SN is called SCG (Secondary Cell Group). In addition, in DC, the MCG is composed of one PCell and one or more SCell, and the SCG is composed of one PSCell (Primary SCell) and one or more SCell. Note herein that CC and cells may be used interchangeably. In other words, a CC in the specification and claims may be replaced by a cell.

The processing operation according to this embodiment may be performed in the system configuration shown in Fig. 1, in the system configuration shown in Fig. 2, or may be performed in other system configurations. When DC is executed, cross carrier scheduling may be performed between cells within one cell group or may be performed between a plurality of cell groups.

### (Basic Operation Example)

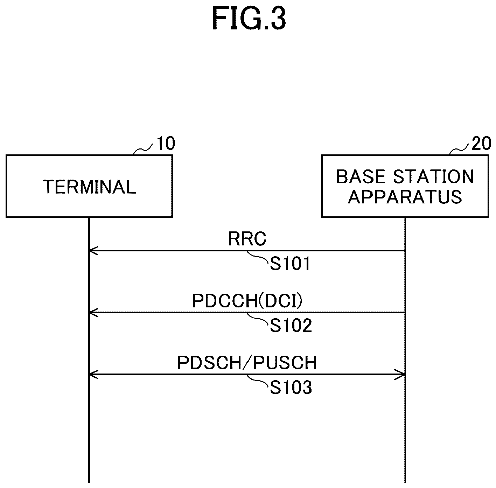

Referring to Fig. 3, a basic operation example of a communication system according to an embodiment of the present invention will be described. This operation is common to Examples 1-4, which will be described later.

In S101, the base station apparatus 10 transmits configuration information to the terminal 20 by an RRC message, and the terminal 20 receives the configuration information. This configuration information includes, for example, crossCarrier SchedulingConfig, which is configuration information for cross carrier scheduling for a serving cell. The crossCarrierSchedulingConfig contains information indicating whether the serving cell for which the configuration information is to be set is to be scheduled from another serving cell or schedules another serving cell. A "serving cell" may be referred to as a "cell".

In S101, the configuration information received by the terminal 20 may include information set from the base station apparatus 10 to the terminal 20, which will be described in each Example later.

In S102, the base station apparatus 10 transmits a DCI (control information) by a PDCCH in a cell (referred to as a cell A) and the terminal 20 receives the DCI in the cell A. If the terminal 20 is configured with cross carrier scheduling at the cell A, the DCI is, for example, a DCI that schedules PDSCH reception/PUSCH transmission (PDSCH reception or PUSCH transmission) of a cell other than the cell A (cell B). In S102, PDSCH reception/PUSCH transmission of cell A may be scheduled in the terminal 20 by a DCI received in the cell B.

In S103, the terminal 20performs PDSCH reception/PUSCH transmission according to the DCI received at S102.

Hereinafter, scheduling by a DCI transmitted by a PDCCH may be referred to as scheduling by a PDCCH.

### (Overview of Problems and Embodiments)

As described above, in this embodiment, the base station apparatus 10 can perform cross carrier scheduling to the terminal 20 by a PDCCH.

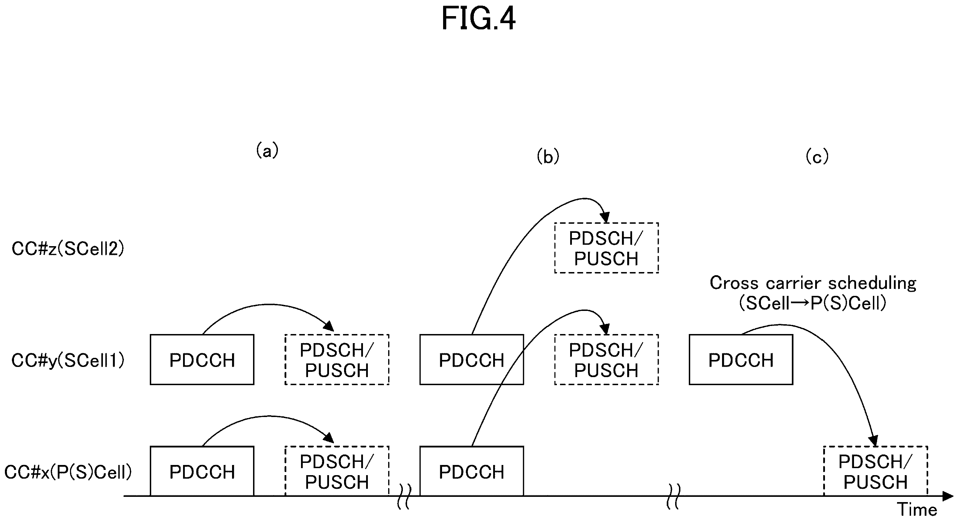

An example of cross-carrier scheduling will be described with reference to FIG. 4. Here, in Figs. 4(a) and 4(b), it is assumed that CrossCarrierSchedulingConfig described in Non-Patent Document 2 is configured for each cell constituting carrier aggregation.

In Fig. 4(a), since P(S)Cell and SCell1 are configured with own as schedulingCellInfo, PDSCH reception/PUSCH transmission of the cell is scheduled by a PDCCH of the cell in each of the P(S)Cell and the SCell.

In Fig. 4(b), the P(S)Cell is configured with own as schedulingCellInfo, and the P(S)Cell schedules PDSCH reception/PUSCH transmission of the SCell1 corresponding to cif included in the DCI received by the P(S)Cell.

For the SCell1, other (scheduling cell is the P(S)Cell) is configured, and a PDCCH of the P(S)Cell schedules PDSCH reception/PUSCH transmission.

When "own (cif exists)" is configured in the SCell1, the SCell1 schedules PDSCH reception/PUSCH transmission of the SCell2 corresponding to cif included in a DCI to be received in the SCell1. For SCell2, other (SCell1 is scheduling cell) is configured, and a PDCCH of the SCell1 schedules PDSCH reception/PUSCH transmission.

In FIG. 4(c), PDCCH of the SCell1 schedules PDSCH reception/PUSCH transmission of the P(S)Cell.

To enable scheduling of PDSCH reception/PUSCH transmission of a P(S)Cell from an SCell, it can be considered to configure schedulingCellInfo=other to the P(S)Cell. In the prior art described in Non-Patent Document 2, schedulingCellInfo=other can only be configured to an SCell, but by eliminating the restriction, schedulingCellInfo=other can be configured to a P(S)Cell.

However, schedulingCellInfo=other is configured to the terminal 20 by RRC configuration information, so unless RRC reconfiguration is performed on the terminal 20, the cell for scheduling PDSCH reception/PUSCH transmission of the corresponding P(S)Cell is limited to the SCell.

Considering that resource usage of each cell changes over time, it would be desirable to be able to schedule PDSCH reception/PUSCH transmission of a P(S)Cell from either an SCell or the P(S)Cell.

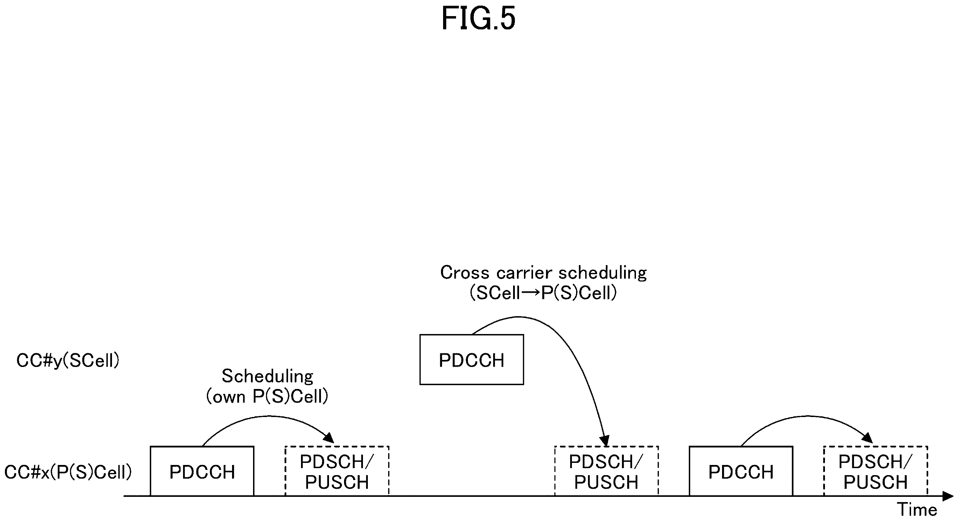

Accordingly, in this embodiment, as shown in Fig. 5, cells for scheduling PDSCH reception/PUSCH transmission of a P(S) Cell can be easily switched between the P(S) Cell and an SCell according to the passage of time.

Hereinafter, the technology according to the present embodiment will be described using Examples 1 to 4. Any one or more of the embodiments of Examples 1 through 4 may be implemented in any combination. In the description of Examples 1 to 4, the step number in the basic operation example shown in Fig. 3 is referred to as appropriate. Reference is also optionally made to FIG. 5, which illustrates that cells that schedule PDSCH reception/PUSCH transmission of a P(S) Cell are switched between a P(S) Cell and an SCell.

Note that the following examples illustrate a technique for switching cells for scheduling PDSCH reception/PUSCH transmission in a P(S)Cell between an SCell and the P(S)Cell, but this technique is applicable not only between the P(S)Cell and the SCell. For example, the technique described in the following examples may be applied between multiple SCells.

### (Example 1)

In Example 1, the terminal 20 assumes that the terminal 20 is configured by RRC so that PDSCH reception/PUSCH transmission of a P(S)Cell is scheduled by a PDCCH of an SCell and a PDCCH of the P(S)Cell when cross carrier scheduling is configured from the base station apparatus 10 in the P(S)Cell.

In terms of the base station apparatus 10, the base station apparatus 10 assumes that PDSCH reception/PUSCH transmission of the P(S)Cell at the terminal 20 can be scheduled by both the PDCCH of the SCell and the PDCCH of the P(S)Cell when the base station apparatus 10 configures cross carrier scheduling in the P(S)Cell of the terminal 20. More specifically, it is as follows.

In S101 illustrated in FIG. 3, the base station apparatus 10 transmits configuration information (CrossCarrierSchedulingConfig) of cross carrier scheduling to the terminal 20 as configuration information of the P(S)Cell by RRC signaling, and the terminal 20 receives the configuration information.

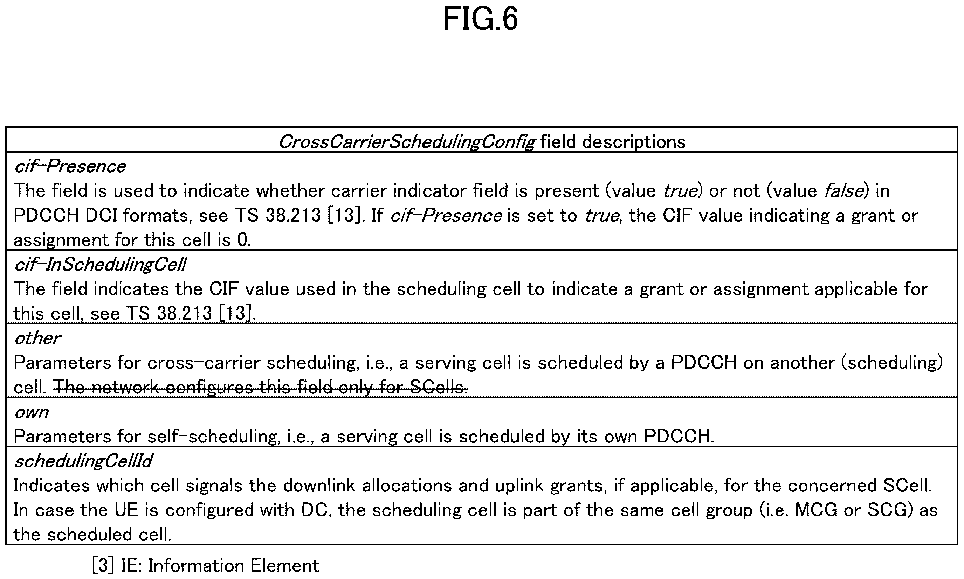

Fig. 6 shows an example of the specification to which the terminal 20 comply in Example 1(excerpt of Non-Patent Document 2 and the changed portion are shown) . As shown in Fig. 6, the limitation of cells of the target to which other is configured as schedulingCellInfo in CrossCarrierSchedulingConfig (conventionally, only SCell) is deleted, and schedulingCellInfo=other can be configured also for a P(S)Cell.

In S101 illustrated in FIG. 3, the base station apparatus 10 configures "schedulingCellInfo=other" (schedulingCellId=n1) to the terminal 20 by CrossCarrierSchedulingConfig, which is configuration information of the P(S)Cell.

This configuration information means that PDSCH reception/PUSCH transmission in the P(S)Cell is scheduled by a PDCCH received in a cell other than the P(S)Cell (i.e., SCell), and the ID of the cell that performs the scheduling is n1.

In this embodiment, in addition to monitoring a PDCCH of the SCell specified by SchedulingCellId=n1 of other, the terminal 20 that receives this configuration information also monitors a PDCCH of the P(S)Cell that is the cell in which other is configured.

The base station apparatus 10 may schedule PDSCH reception/PUSCH transmission in the P(S)Cell with a PDCCH of the SCell designated by scheduling CellId=n1 of other, and it may schedule PDSCH reception/PUSCH transmission in the P(S)Cell with a PDCCH of the P(S)Cell.

Since the terminal 20 monitors a PDCCH of the SCell and a PDCCH of the P(S) Cell, it is easy to switch receiving cells of a PDCCH for scheduling PDCCH reception/PUSCH transmission at the P(S)Cell. For example, as shown in FIG. 5, the terminal performs PDSCH reception/PUSCH transmission at the P(S)Cell by scheduling of a PDCCH received at the P(S)Cell, then by scheduling of a PDCCH received at the SCell, the terminal performs PDSCH reception/PUSCH transmission at the P(S) Cell, then by scheduling of a PDCCH received at the P(S)Cell, the terminal performs PDSCH reception/PUSCH transmission at the P(S)Cell. From the point of view of the base station apparatus 10, the base station apparatus 10 can easily switch transmission cells of a PDCCH for performing scheduling for PDSCH reception/PUSCH transmission in the P(S)Cell.

In order to realize the above-described operation, it is an example that the base station apparatus 10 configures "schedulingCellInfo=other" (schedulingCellId=n1) to the terminal 20 by CrossCarrierSchedulingConfig, which is configuration information of the P(S)Cell.

Configuration information other than the above-described schedulingCellInfo=other (schedulingCellId=n1) may be configured from the base station apparatus 10 to the terminal 20. An example in this case will be described as a variation of Example 1.

### <Example 1 modification>

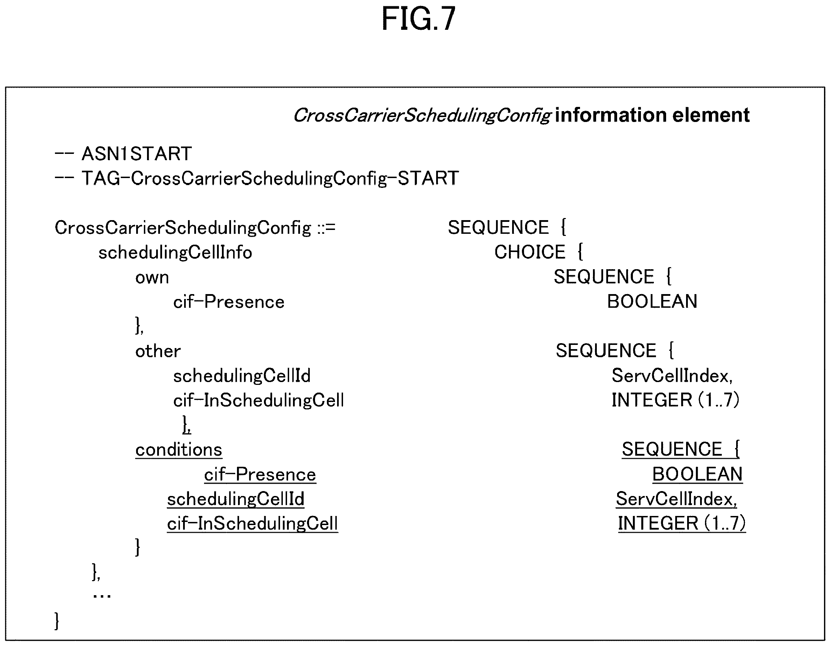

In this variation, an example of a specification document with which the terminal 20 complies (an extract from Non-Patent Document 2, where a changed portion is shown) is shown in Fig. 7.

As shown in Fig. 7, conditions is added as a value of schedulingCellInfo. The contents of conditions are cif-Presence, schedulingCellId, and cif-InSchedulingCell.

The cif-Presence is information in the conventional "own", indicating that the configuration target cell is a cell that performs scheduling in cross carrier scheduling. When cif is received by a DCI in the relevant cell, the other cell (or own cell) shown in the cif is scheduled.

SchedulingCellId and cif-InSchedulingCell are conventional information in other. SchedulingCellId indicates an ID of another cell that performs scheduling in the configuration target cell, and cif-InSchedulingCell indicates cif corresponding to the configuration target cell in the DCI in the other cell.

In S101 illustrated in FIG. 3, the base station apparatus 10 configures "schedulingCellInfo=conditions" (schedulingCellId=n1, cif=Presence=true) to the terminal 20 by CrossCarrierSchedulingConfig, which is configuration information of the P(S)Cell.

This configuration information means that PDSCH reception/PUSCH transmission in the P(S)Cell is scheduled by a PDCCH received in a cell other than the P(S)Cell (i.e., SCell), and the ID of the cell that performs the scheduling is n1. It also means that PDSCH reception/PUSCH transmission in the P(S)Cell is scheduled by a PDCCH received in the P(S)Cell. Note that if PDSCH reception/PUSCH transmission in the P(S)Cell is scheduled by a PDCCH received in the P(S)Cell, cif in a DCI received in a PDCCH is 0.

The terminal 20 receiving this configuration information monitors a PDCCH of the P(S)Cell in addition to monitoring a PDCCH of the SCell specified by SchedulingCellId=n1.

"Monitor PDCCH" may be replaced by "Monitor DCI transmitted by PDCCH". "Receive PDCCH" may also be replaced by "Receive DCI by PDCCH". "Decode PDCCH" may also be replaced by "Decode DCI". "Decode PDCCH" may also be replaced by "Decode DCI format".

The base station apparatus 10 may also schedule PDSCH reception/PUSCH transmission in the P(S)Cell by a PDCCH of the SCell designated by SchedulingCellId=n1 or schedule PDSCH reception/PUSCH transmission in the P(S)Cell by a PDCCH of the P(S)Cell.

Since the terminal 20 monitors a PDCCH of the SCell and a PDCCH of the P(S) Cell, it is easy to switch receiving cells of a PDCCH for scheduling PDSCH reception/PUSCH transmission at the P(S)Cell. For example, as shown in FIG. 5, by scheduling of a PDCCH received at the P(S)Cell, the terminal performs PDSCH reception/PUSCH transmission at the P(S)Cell, then, by scheduling of PDCCH received at the SCell, the terminal performs PDSCH reception/PUSCH transmission at the P(S)Cell, and then, by scheduling of a PDCCH received at the P(S)Cell, the terminal performs PDSCH reception/PUSCH transmission at the P(S)Cell. From the point of view of the base station apparatus 10, the base station apparatus 10 can easily switch transmission cells of a PDCCH which performs scheduling for PDSCH reception/PUSCH transmission in the P(S)Cell.

In accordance with Example 1 (including variations), cells for scheduling PDSCH reception/PUSCH transmission of the P(S)Cell can be switched between the P(S)Cell and Scell without RRC reconfiguration.

### (Example 2)

Next, Example 2 will be described. Example 2 assumes Example 1. That is, in accordance with Example 1, the terminal 20 monitors both a PDCCH of an SCell designated by schedulingCell Id = n1 and a PDCCH of a P(S)Cell as a PDCCH for scheduling PDSCH reception/PUSCH transmission of the P(S)Cell. Example 2 illustrates an embodiment of decoding of the PDCCH of the SCell and the PDCCH of the P(S)Cell.

In Example 2, as described in Example 1, the terminal 20 is configured with schedulingCellInfo=other (scheduling CellId=n1) for the P(S)Cell. For the P(S)Cell, schedulingCellInfo = conditions (cif-Presence = true, schedulingCellId = n1) may be configured.

Accordingly, the terminal 20 monitors both a PDCCH transmitted by the P(S)Cell and a PDCCH transmitted by the SCell (SCellIndex=n1). In this situation, in Example 2, the terminal 20 assumes a PDCCH to decode in the following pattern. These patterns will be described as Examples 2-1 to 2-3.

In the example described below, the "same slot" of the P(S)Cell and the SCell is one slot, but may be multiple slots rather than one slot. When SCS differs between the P(S)Cell and the SCell, the slot length is also different. In this case, the slot used as a reference for determining the "same slot (time length)" may be a slot of the P(S)Cell or a slot of the SCell. Hereinafter, the slot lengths of the P(S)Cell and the SCell are assumed to be the same.

### <Example 2-1>

In Example 2-1, the terminal 20 receives a PDCCH at the P(S)Cell (schedulingCellInfo=other(scheduling CellId = n1)) and does not receive a PDCCH at the SCell (SCellIndex = n1) in the same slot.

In this case, for example, the base station apparatus 10 transmits a PDCCH at the P(S)Cell (schedulingCellInfo=other(scheduling CellId = n1)) and does not transmit a PDCCH at the SCell (SCellIndex = n1) in the same slot. Alternatively, the base station apparatus 10 may transmit a PDCCH at the P(S)Cell (schedulingCellInfo=other(scheduling CellId = n1)) and transmit a PDCCH at the SCell (SCellIndex = n1) in the same slot, but the terminal 20 receives a PDCCH only at the P(S)Cell.

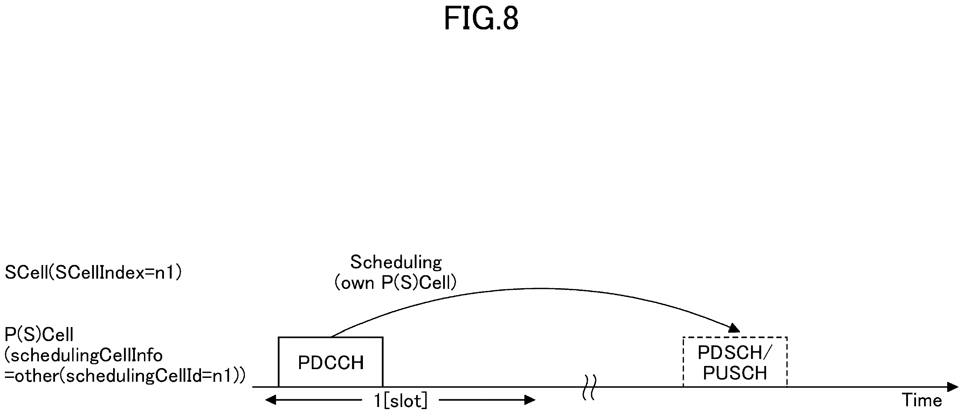

In this case, as shown in FIG. 8, the terminal 20 decodes the PDCCH received by the P(S)Cell (schedulingCellInfo=other(scheduling Cell Id = n1)). The terminal 20 performs PDSCH reception/PUSCH transmission in the P(S)Cell in accordance with the DCI information obtained by decoding (such as allocation information of time and frequency resources).

### <Example 2-2>

In Example 2-2, the terminal 20 does not receive a PDCCH at the P(S)Cell (schedulingCellInfo=other(scheduling CellId = n1)) and also receives a PDCCH at the SCell (SCellIndex = n1) in the same slot.

In this case, for example, the base station apparatus 10 does not transmit a PDCCH at the P(S)Cell (schedulingCellInfo=other (scheduling CellId = n1)) and transmits a PDCCH at the SCell (SCellIndex = n1) in the same slot. Alternatively, the base station apparatus 10 may transmit a PDCCH at the P(S)Cell (schedulingCellInfo=other(schedulingCellId = n1)) and transmit a PDCCH at the SCell (SCellIndex = n1) in the same slot, but the terminal 20 receives a PDCCH only at the SCell.

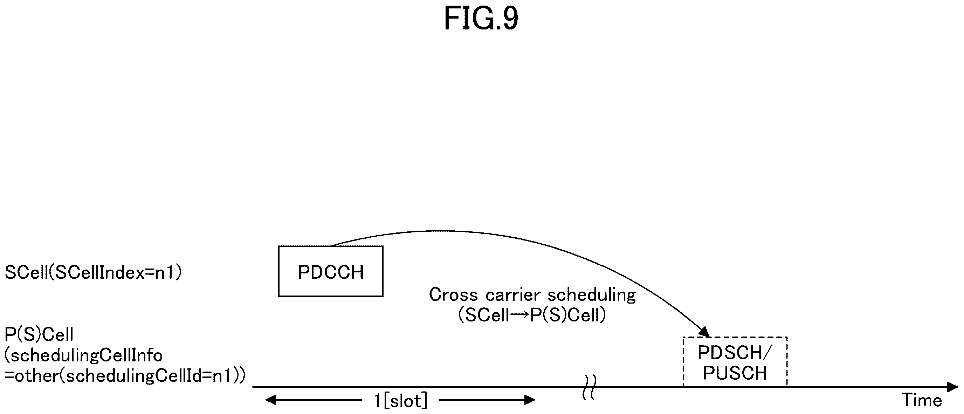

In this case, as shown in FIG. 9, the terminal 20 decodes the PDCCH received at the SCell (SCellIndex=n1). The terminal 20 performs PDSCH reception/PUSCH transmission in the P(S)Cell in accordance with the DCI information obtained by decoding (such as cif indicating P(S)Cell, allocation information of time and frequency resources).

### <Example 2-3>

In Example 2-3, the terminal 20 receives a PDCCH at the P(S)Cell (schedulingCellInfo=other(scheduling CellId = n1)) and receives a PDCCH at the SCell (SCellIndex = n1) in the same slot.

In this case, the base station apparatus 10 transmits a PDCCH at the P(S)Cell (schedulingCellInfo=other (scheduling CellId=n1)) and transmits a PDCCH at the SCell (SCellIndex = n1) in the same slot. There are multiple patterns in this case. These are described as Examples 2-3-1 to 2-3-6 below.

### <Example 2-3-1>

In Example 2-3-1, the terminal 20 decodes the PDCCH received in the P(S)Cell (schedulingCellInfo=other(scheduling CellId=n1)), but does not decode the PDCCH received in the SCell (SCellIndex=n1).

The terminal 20 performs PDSCH reception/PUSCH transmission in the P(S) Cell in accordance with the DCI information obtained by decoding (such as allocation information of time and frequency resources).

### <Example 2-3-2>

In Example 2-3-2, the terminal 20 decodes the PDCCH received by the SCell (SCellIndex=n1) without decoding the PDCCH received by the P(S)Cell (schedulingCellInfo=other(scheduling Cell Id=n1)).

The terminal 20 performs PDSCH reception/PUSCH transmission in the P(S)Cell in accordance with the DCI information obtained by decoding (such as cif indicating the P(S)Cell, allocation information of time and frequency resources).

### <Example 2-3-3>

In Example 2-3-3, terminal 20 decodes the PDCCH received at the P(S)Cell (scheduling CellInfo=other(scheduling CellId=n1)) and the PDCCH received at the SCell (SCellIndex=n1).

In this case, the terminal 20 acquires a decoding result (DCI-A) of the PDCCH received by the P(S)Cell (schedulingCellInfo=other(scheduling Cell Id=n1)) and a decoding result (DCI-B) of the PDCCH received by the SCell (SCellIndex=n1).

For example, the terminal 20 performs PDSCH reception/PUSCH transmission in the P(S)Cell according to both DCI-A and DCI-B. In this case, for example, the base station apparatus 10 creates the DCI-A and the DCI-B so that the information of the DCI-A and the information of the DCI-B become information of one DCI. Alternatively, DCI-A and DCI-B may be the same.

The terminal 20 may perform PDSCH reception/PUSCH transmission in the P(S)Cell according to a DCI of either one of the DCI-A and the DCI-B. Decoding conditions described in Example 2-3-4 may be used to determine which to use between DCI-A and DCI-B.

Further, configuration of which to use the DCI-A or the DCI-B is made to the terminal 20 by RRC signaling or MAC signaling, and the terminal 20 may select a DCI to be used from the DCI-A and the DCI-B according to the configuration.

### <Example 2-3-4>

In Example 2-3-4, the terminal 20 determines a PDCCH to decode(PDCCH of the P(S)Cell or PDCCH of the SCell) according to an amount of a time resource of the PDCCH at the P(S)Cell (schedulingCellInfo=other(scheduling Cell Id=n1)).

The time resource amount of the PDCCH is, for example, the number of symbols of the PDCCH. The number of symbols of the PDCCH of the P(S) Cell is information configured by RRC signaling from the base station apparatus 10 to the terminal 20.

For example, the terminal 20 decodes the PDCCH of the P(S)Cell if the number of PDCCH symbols of the P(S)Cell is greater than or equal to X [symbol/slots] and decodes the PDCCH of the SCell if the number of PDCCH symbols of the P(S)Cell is less than or equal to X [symbol/slot].

The above-described threshold value X is predetermined in the specification, and the terminal 20 (and the base station apparatus 10) may hold X, or it may be configured from the base station apparatus 10 to the terminal 20 by RRC signaling (or MAC signaling), or it may be updated by MAC signaling (or RRC signaling).

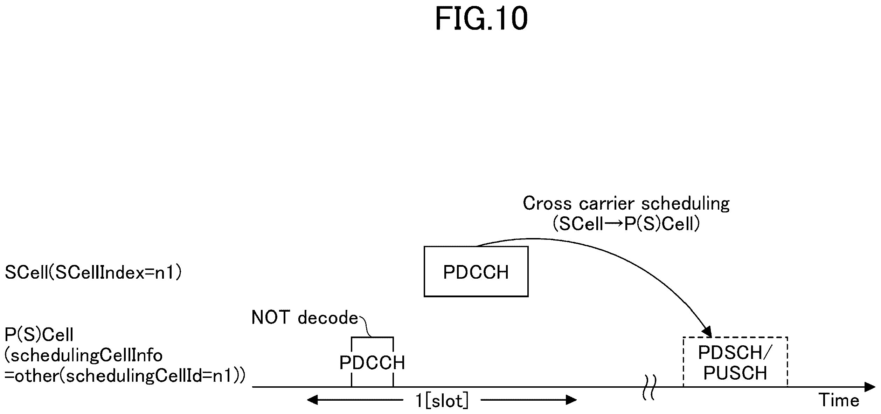

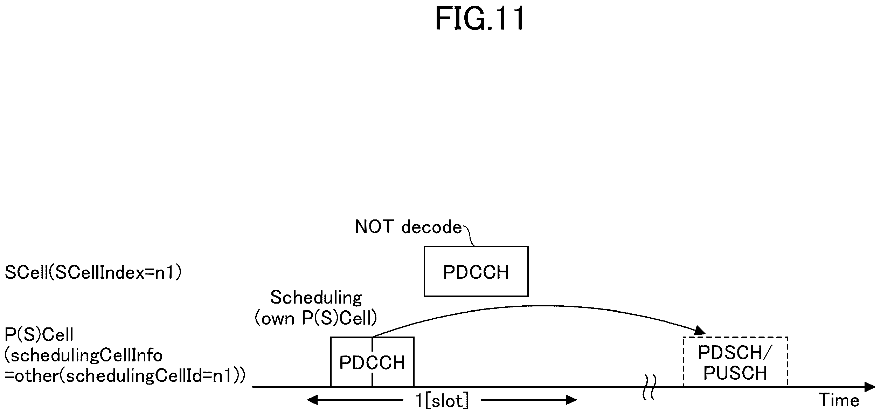

A specific example will be described with reference to Figs. 10 and 11. Figures 10 and 11 show an example when X = 2 [symbol/slot].

In the case shown in FIG. 10, the terminal 20 receives a PDCCH in one slot at each of the P(S)Cell and the SCell. The terminal 20 decodes only the PDCCH of the SCell because it determines, based on configuration information, that the number of PDCCH symbols of the P(S)Cell is less than two. The terminal 20 performs PDSCH reception/PUSCH transmission at the P(S)Cell according to the decoded DCI.

In the case shown in FIG. 11, the terminal 20 receives a PDCCH in one slot at each of the P(S)Cell and the SCell. The terminal 20 decodes only the PDCCH of the P(S)Cell because it determines that the PDCCH symbol number of the P(S)Cell is two or more based on the configuration information. The terminal 20 performs PDSCH reception/PUSCH transmission at the P(S)Cell according to the decoded DCI.

### <Example 2-3-5>

The terminal 20 receives a PDCCH in one slot at each of the P(S) Cell and the SCell. In Example 2-3-5, the terminal 20 decodes a first received PDCCH of the PDCCH of the P(S)Cell and the PDCCH of the SCell, and does not decode a PDCCH received after that. The terminal 20 performs PDSCH reception/PUSCH transmission at the P(S)Cell according to the decoded DCI.

The terminal 20 may decode a PDCCH received second and not decode the first received PDCCH in the PDCCH of the P(S)Cell and the PDCCH of the SCell.

As to whether to decode the first received PDCCH or decode the subsequently received PDCCH in the PDCCH of the P(S)Cell and the PDCCH of the SCell, it may be predefined in the specification, and the terminal 20 (and the base station apparatus 10) may retain the information, or the terminal 20 may be configured with it from the base station apparatus 10 by RRC signaling (or MAC signaling), or it may be updated by MAC signaling (or RRC signaling).

### <Example 2-3-6>

In Example 2-3-6, the terminal 20 is configured with "information (information indicating a cell to decode) indicating which cell to decode when PDCCH is received in each of the P(S)Cell and the SCell in the same slot."

Upon receipt of a PDCCH at each of the P(S)Cell and the SCell in one slot, the terminal 20 decodes the PDCCH of the P(S)Cell, or the PDCCH of the Scell, or the PDCCH of the P(S)Cell and the PDCCH of SCell according to the above configuration.

The information representing the cell to perform decoding may be predefined in the specification, and the terminal 20 (and the base station apparatus 10) may hold the information, or the information may be configured from the base station apparatus 10 to the terminal 20 by RRC signaling (or MAC signaling), or it may be updated by MAC signaling (or RRC signaling).

In accordance with Example 2, cells for scheduling PDSCH reception/PUSCH transmission of the P(S)Cell can be switched between the P(S)Cell and the Scell without RRC reconfiguration.

### (Example 3)

Next, Example 3 will be described. Example 3 also assumes Example 1. That is, in accordance with Example 1, the terminal 20 monitors both a PDCCH of the SCell designated by schedulingCellId = n1 and a PDCCH of the P(S)Cell as a PDCCH for scheduling PDSCH reception/PUSCH transmission of the P(S)Cell. Hereinafter, Examples 3-1 and 3-2 will be described with respect to decoding operation.

### <Example 3-1>

In Example 3-1, the terminal 20 determines a PDCCH to decode based on a timing of receipt of a PDCCH of the Scell for decoding of the PDCCH of the SCell.

The information of the PDCCH reception timing of the SCell (concrete example is n2 which will be described later) may be predefined in the specification, and the terminal 20 (and the base station apparatus 10) may hold the information, or it may be configured from the base station apparatus 10 to the terminal 20 by RRC signaling (or MAC signaling), or it may be updated by MAC signaling (or RRC signaling).

For example, the terminal 20 does not decode the PDCCH of the P(S) Cell but decode the PDCCH received in the Scell (SCellIndex=n1) during n2 [slots] from reception in the P(S)Cell of a PDCCH for scheduling PDSCH reception/PUSCH transmission of the P(S)Cell (scheduling Cell Info=other(scheduling Cell Id=n1)).

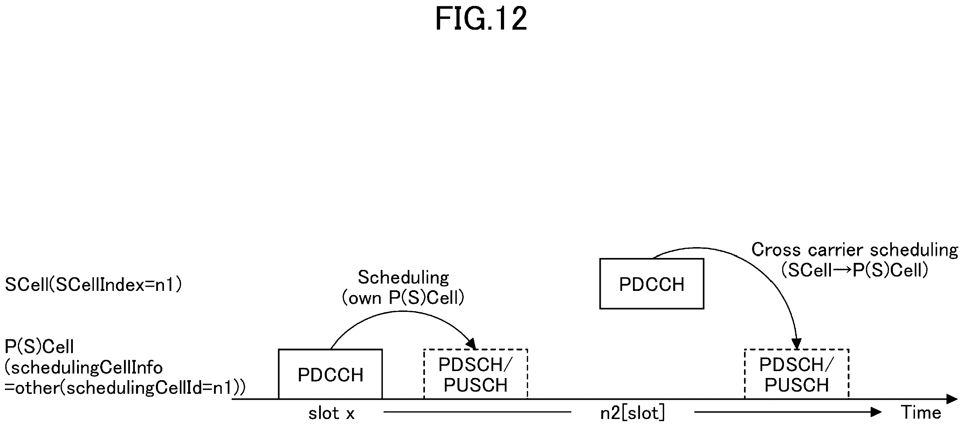

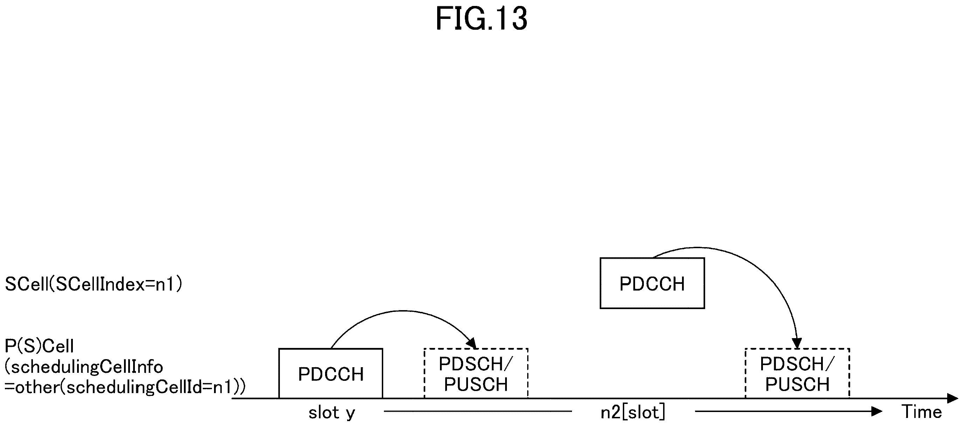

Specific examples will be described with reference to Figs. 12 and 13. In FIG. 12, for example, the terminal 20 receives a PDCCH at slot x in the P(S)Cell. Since the slot x does not fall within the time interval of the "n2 slot after receiving PDCCH on the P(S)Cell," the terminal 20 decodes the PDCCH received on the slot x in the P(S)Cell and performs PDSCH reception/PUSCH transmission according to the decoded DCI.

During the time interval from the start of the slot x+1 to the end of the slot x+n2, the terminal 20 decodes the PDCCH received at the SCell without decoding the PDCCH upon receipt of the PDCCH at the P(S) Cell. In FIG. 12, the terminal 20 receives a PDCCH at the SCell during the time interval and performs PDSCH reception/PUSCH transmission at the P(S)Cell according to the DCI obtained by decoding the PDCCH.

Thereafter, as shown in FIG. 13, the terminal 20 receives a PDCCH at slot y in the P(S)Cell. Since the slot y does not fall within the time interval of "n2 slot after PDCCH is received by the P(S) Cell," the terminal 20 decodes the PDCCH received at the slot y in the P(S)Cell and performs PDSCH reception/PUSCH transmission according to the decoded DCI.

During the time interval from the start of the slot y+1 to the end of the slot y+n2, the terminal 20 decodes a PDCCH received at the SCell without decoding a PDCCH upon receipt of the PDCCH at the P(S)Cell. In FIG. 13, the terminal 20 receives a PDCCH at the SCell during the time interval and performs PDSCH reception/PUSCH transmission at the P(S)Cell according to the DCI obtained by decoding the PDCCH.

Since the base station apparatus 10 knows that the terminal 20 does not decode the PDCCH when it receives the PDCCH in the P(S)Cell during the time interval from the start of the slot x+1/y+1 to the end of the slot x+n2/y+n2, the base station apparatus 10 may not transmit a PDCCH in the P(S)Cell during the time interval from the start of the slot x+1/y+1 to the end of the slot x+n2/y+n2.

Note that, as to count of n2 slots, it is performed for the slot of the P(S)Cell here, but it may be performed for the slot of the SCell. Which cell slot to use for counting n2 slots may be predefined, and the terminal 20 (and the base station apparatus 10) may hold the information, the terminal 10 may be configured with it from the base station apparatus 10 by RRC signaling (or MAC signaling), and it may be updated by MAC signaling (or RRC signaling).

For a time interval which does not fall within the time interval from the start of slot x+1/y+1 to the end of slot x+n2/y+n2, Example 2 may be applied.

### <Example 3-2>

In Example 3-2, the terminal 20 determines a PDCCH to decode based on the timing of receipt of a PDCCH of the P(S)Cell for decoding the PDCCH of the P(S)Cell.

The information of the PDCCH reception timing of the P(S)Cell (concrete example is n2 which will be described later) may be predefined in the specification, and the terminal 20 (and the base station apparatus 10) may hold the information, or it may be configured from the base station apparatus 10 to the terminal 20 by RRC signaling (or MAC signaling), or it may be updated by MAC signaling (or RRC signaling).

For example, the terminal 20 does not decode the PDCCH of the Scell but decode the PDCCH received in the P(S)Cell (scheduling Cell Info=other(scheduling Cell Id=n1)) during n2 [slots] from reception in the SCell of a PDCCH for scheduling PDSCH reception/PUSCH transmission of the P(S)Cell (scheduling Cell Info=other(schedulingCellId=n1)).

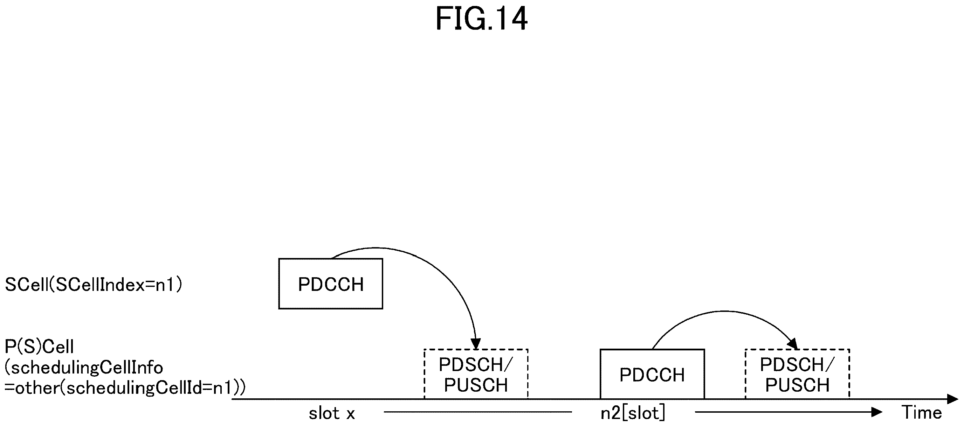

A specific example will be described with reference to Fig. 14. In FIG. 14, for example, the terminal 20 receives a PDCCH at slot x at the SCell. Since the slot x does not fall within the time interval of "n2 slot after receiving a PDCCH at the SCell," the terminal 20 decodes the PDCCH received at the slot x in the SCell and performs PDSCH reception/PUSCH according to the decoded DCI.

During the time interval from the start of the slot x+1 to the end of the slot x+n2, the terminal 20 decodes the PDCCH received at the P(S)Cell without decoding the PDCCH upon receipt of the PDCCH at the SCell. In FIG. 14, the terminal 20 receives a PDCCH at the P(S) Cell during the time interval and performs PDSCH reception/PUSCH transmission at the P(S)Cell according to the DCI obtained by decoding the PDCCH.

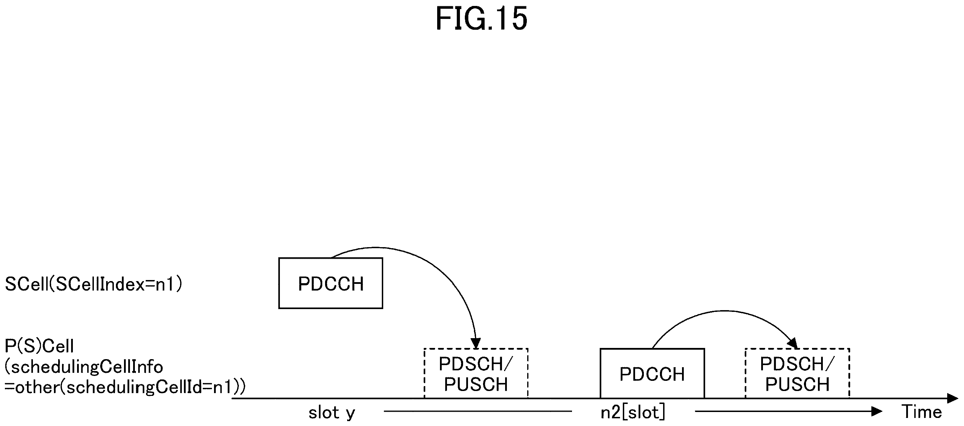

Thereafter, as shown in FIG. 15, the terminal 20 receives a PDCCH at slot y in the SCell. Since the slot y does not fall within the time interval of "n2 slot after PDCCH is received by the SCell," the terminal 20 decodes the PDCCH received at the slot y in the SCell and performs PDSCH reception/PUSCH transmission according to the decoded DCI.

During the time interval from the start of the slot y+1 to the end of the slot y+n2, the terminal 20 decodes a PDCCH received at the P(S)Cell without decoding a PDCCH upon receipt of the PDCCH at the SCell. In FIG. 15, the terminal 20 receives a PDCCH at the P(S) Cell during the time interval and performs PDSCH reception/PUSCH transmission at the P(S)Cell according to the DCI obtained by decoding the PDCCH.

Since the base station apparatus 10 knows that the terminal 20 does not decode the PDCCH when it receives the PDCCH in the SCell during the time interval from the start of the slot x+1/y+1 to the end of the slot x+n2/y+n2, the base station apparatus 10 may not transmit a PDCCH in the SCell during the time interval from the start of the slot x+1/y+1 to the end of the slot x+n2/y+n2.

Note that, as to count of n2 slots, it is performed for the slot of the SCell here, but it may be performed for the slot of the P(S)Cell. Which cell slot to use for counting n2 slots may be predefined, and the terminal 20 (and the base station apparatus 10) may hold the information, the terminal 10 may be configured with it from the base station apparatus 10 by RRC signaling (or MAC signaling), and it may be updated by MAC signaling (or RRC signaling).

For a time interval which does not fall within the time interval from the start of slot x+1/y+1 to the end of slot x+n2/y+n2, Example 2 may be applied.

Which operation to perform between Example 3-1 and Example 3-2 may be predetermined in the specification, and the terminal 20 (and the base station apparatus 10) may retain the information, or it may be configured from the base station apparatus 10 to the terminal 20 by RRC signaling (or MAC signaling), or it may be updated by MAC signaling (or RRC signaling).

In accordance with Example 3, cells scheduling PDSCH reception/PUSCH transmission of the P(S)Cell can be switched between the P(S)Cell and the Scell without RRC reconfiguration. Example 3 also reduces the number of times of decoding compared to the case in which the entire PDCCHes of the P(S)Cell and the Scell are monitored and decoded.

### (Example 4)

Next, Example 4 will be described. Example 4 also assumes Example 1. That is, in accordance with Example 1, the terminal 20 monitors both a PDCCH of the SCell designated by schedulingCellId = n1 and a PDCCH of the P(S)Cell as a PDCCH for scheduling PDSCH reception/PUSCH transmission of the P(S)Cell.

In Example 4, a type of PDCCH to monitor in each of P(S)Cell and SCell is specified or configured beforehand. The terminal 20 monitors a PDCCH at the P(S)Cell and the SCell, respectively, assuming the specification or the configuration.

The type of PDCCH to monitor in each of the P(S)Cell and the SCell may be predefined in the specification, and the terminal 20 (and the base station apparatus 10) may hold the information, or it may be configured from the base station apparatus 10 to the terminal 20 by RRC signaling (or MAC signaling), or it may be updated by MAC signaling (or RRC signaling).

The type of PDCCH is, for example, a search space for monitoring a PDCCH, or a scheduling target of a PDCCH. The type of PDCCH may be a beam by which the PDCCH is transmitted (specifically a SSB index or a CSI-RS resource index which is QCL related to the PDCCH). The type of PDCCH may also be an RNTI used to decode a DCI.

If the type of PDCCH is a search space to monitor a PDCCH, suppose that the terminal 20 is configured with information indicating monitoring a PDCCH by CSS (Common Search Space) in the P(S)Cell and monitoring a PDCCH by USS (UE-specific Search Space) in the SCell.

In this case, the terminal 20 monitors a PDCCH with CSS in the P(S)Cell and monitors a PDCCH with USS in the SCell.

If the terminal 20 is configured with information indicating that a PDCCH is monitored with USS in the P(S) Cell and a PDCCH is monitored with CSS in the SCell, the terminal 20 monitors a PDCCH with the USS in the P (S) Cell and monitors a PDCCH with the CSS in the SCell.

If the type of PDCCH is a scheduling target of a PDCCH (i.e., DCI), suppose that the terminal 20 is configured with information indicating that a PDCCH for scheduling PDSCH is to be monitored in the P(S)Cell and a PDCCH for scheduling PUSCH is to be monitored in the SCell. In this case, the terminal 20 monitors a PDCCH for scheduling PDSCH in the P(S)Cell and monitors a PDCCH for scheduling PUSCH in the SCell.

Suppose that the terminal 20 is configured with information indicating that a PDCCH for scheduling PUSCH is to be monitored in the P(S)Cell and a PDCCH for scheduling PDSCH is to be monitored in the SCell. In this case, the terminal 20 monitors a PDCCH for scheduling PUSCH in the P(S)Cell and monitors a PDCCH for scheduling PDSCH in the SCell.

In Example 4, the terminal 20 may apply, for example, Example 2 or Example 3 to determine which cell's PDCCH to decode for a received PDCCH as a result of monitoring.

### (Equipment configuration)

Next, a functional configuration example of the base station apparatus 10 and the terminal 20 for performing the processes and operations described above will be described. The base station apparatus 10 and the terminal 20 include functions for implementing the Examples 1-4 described above. However, the base station apparatus 10 and the terminal 20 may each comprise only functions of any one of Examples 1-4.

### <Base Station Apparatus 10>

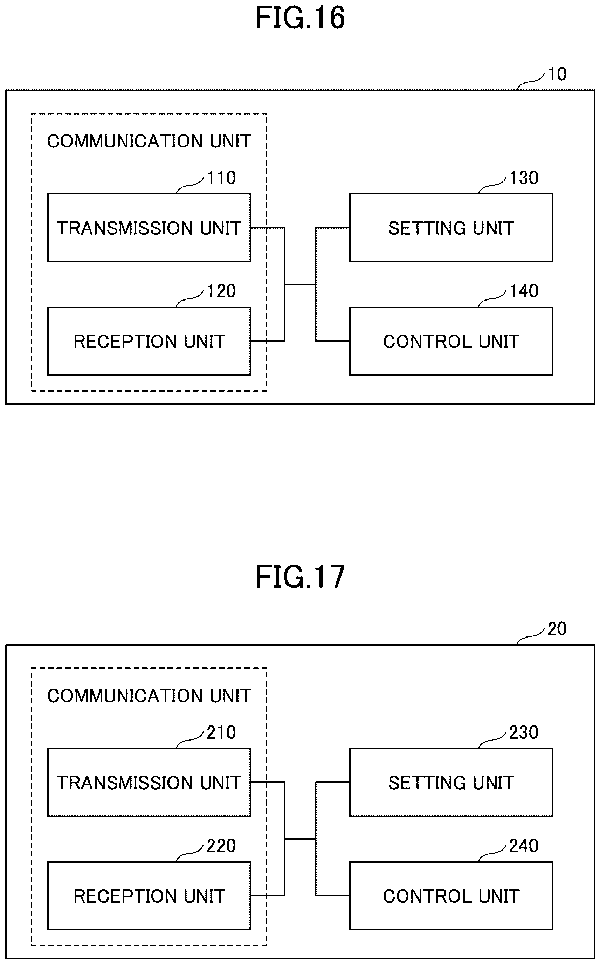

Fig. 16 is a diagram illustrating an example of a functional configuration of the base station apparatus 10. As shown in Fig. 16, the base station apparatus 10 includes a transmission unit 110, a reception unit 120, a setting unit 130, and a control unit 140. The functional configuration shown in FIG. 16 is only one example. If the operation according to the embodiments of the present invention can be performed, the function category and the name of the function unit may be any one. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. The transmission unit 110 has a function to transmit NR-PSS, NR-SSS, NR-PBCH, DL/UL control signals, DL data, and the like to the terminal 20. The transmission unit 110 transmits the configuration information described in Examples 1-4.

The setting unit 130 stores preconfigured configuration information and various configuration information to be transmitted to the terminal 20 in the storage device and reads the preconfigured configuration information from the storage device if necessary. The control unit 140 performs, for example, resource allocation and control of the entire base station apparatus 10. A function unit related to signal transmission in the control unit 140 may be included in the transmission unit 110, and a function unit related to signal reception in the control unit 140 may be included in the receiving unit 120. The transmission unit 110 and the reception unit 120 may be called a transmitter and a receiver, respectively.

### <terminal 20>

Fig. 17 is a diagram illustrating an example of a functional configuration of the terminal 20. As shown in FIG. 17, the terminal 20 includes a transmission unit 210, a reception unit 220, a setting unit 230, and a control unit 240. The functional configuration shown in Fig. 17 is only one example. If the operation according to the embodiments of the present invention can be performed, the function category and the name of the function unit may be any one. The transmission unit 210 and the reception unit 220 may be called a communication unit.

The transmission unit 210 creates a transmission signal from the transmission data and wirelessly transmits the transmission signal. The reception unit 220 receives various signals wirelessly and acquires signals from higher layers from the received signal of the physical layer.

The setting unit 230 stores various configuration information received from the base station apparatus 10 by the reception unit 220 in the storage device and reads it from the storage device as necessary. The setting unit 230 also stores preconfigured configuration information. The control unit 240 controls the entire terminal 20. The control unit 240 may also monitor the PDCCH. A function unit related to signal transmission in the control unit 240 may be included in the transmission unit 210, and a function unit related to signal reception in the control unit 240 may be included in the reception unit 220. The transmission unit 210 and the reception unit 220 may be called a transmitter and a receiver, respectively.

The terminal 20 and the base station apparatus 10 are configured as, for example, a terminal and a base station apparatus described in the following items. Also provided is a reception method described below.

### (Item 1)

A terminal including:
a reception unit configured to receive, from a base station apparatus, configuration information, indicating that scheduling is performed from a second cell to a first cell, of cross carrier scheduling for the first cell,
wherein the reception unit monitors a PDCCH of the first cell and a PDCCH of the second cell.

### (Item 2)

The terminal as described in item 1,
wherein, in a time interval of a slot, when the reception unit receives a PDCCH in the first cell and receives a PDCCH in the second cell, the reception unit
decodes the PDCCH received in the first cell,
decodes the PDCCH received in the second cell,
decodes both of the PDCCH received in the first cell and the PDCCH received in the second cell,
determines a PDCCH to decode based on a time resource amount of the PDCCH or
decodes a PDCCH received earlier or a PDCCH received later among the PDCCH received in the first cell and the PDCCH received in the second cell.

### (Item 3)

The terminal as described in item 1,
wherein the reception unit
does not decode the PDCCH received in the first cell but decodes the PDCCH received in the second cell from when receiving the PDCCH in the first cell until a time of a number of slots elapses, or
does not decode the PDCCH received in the second cell but decodes the PDCCH received in the first cell from when receiving the PDCCH in the second cell until a time of a number of slots elapses.

### (Item 4)

The terminal as described in any one of items 1 to 3,
wherein the reception unit monitors a PDCCH of a type specified or configured as a type of a PDCCH to monitor in each of the first cell and the second cell.

### (Item 5)

A base station apparatus including:
a transmission unit configured to transmit, to a terminal, configuration information, indicating that scheduling is performed from a second cell to a first cell, of cross carrier scheduling for the first cell,
wherein the transmission unit
transmits a PDCCH for performing scheduling for the first cell in the first cell,
transmits a PDCCH for performing scheduling for the first cell in the second cell, or
transmits a PDCCH for performing scheduling for the first cell in the first cell, and transmits a PDCCH for performing scheduling for the first cell in the second cell.

### (Item 6)

A reception method executed by a terminal, the method including:
receiving, from a base station apparatus, configuration information, indicating that scheduling is performed from a second cell to a first cell, of cross carrier scheduling for the first cell, and
monitoring a PDCCH of the first cell and a PDCCH of the second cell.

According to any configuration described in any of the preceding items, there is provided a technique that enables easily switching cells that perform scheduling for a first cell between the first cell and a second cell.

### (Hardware configuration)

The block diagrams (Fig. 16 and Fig. 17) used in the description of the embodiment described above illustrate the block of functional unit. Such function blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses . The function block may be attained by combining one apparatus described above or a plurality of apparatuses described above with software.

The function includes determining, determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions transmission is referred to as the transmitting unit or the transmitter. As described above, the attainment method thereof is not particularly limited.

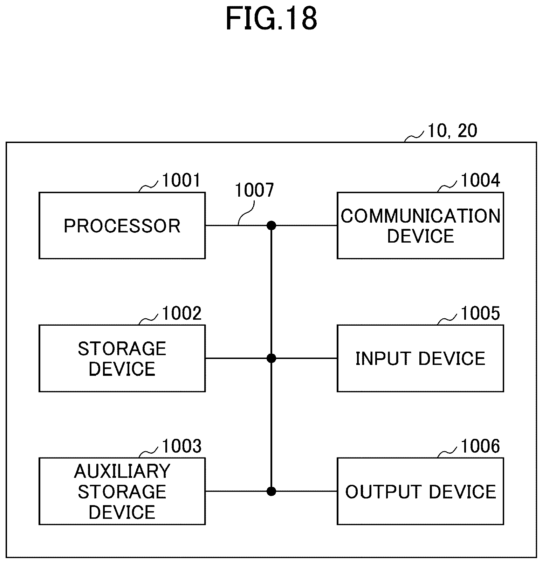

For example, the base station apparatus 10, the user terminal 20, and the like in one embodiment of this disclosure may function as a computer for performing the processing of a radio communication method of this disclosure. Fig. 18 is a diagram illustrating an example of a hardware configuration of the base station apparatus 10 and the user terminal 20 according to one embodiment of this disclosure. The base station apparatus 10 and the user terminal 20 described above may be physically configured as a computer apparatus including a processor 1001, a storage unit 1002, an auxiliary storage unit 1003, a communication unit 1004, an input unit 1005, an output unit 1006, a bus 1007, and the like.

Note that, in the following description, the word "apparatus" can be replaced with a circuit, a device, a unit, or the like. The hardware configuration of the base station apparatus 10 and the user terminal 20 may be configured to include one or a plurality of apparatuses illustrated in the drawings, or may be configured not to include a part of the apparatuses.

Each function of the base station apparatus 10 and the user terminal 20 is attained by reading predetermined software (a program) on hardware such as the processor 1001 and the storage unit 1002 such that the processor 1001 performs an operation, and by controlling the communication of the communication unit 1004 or by controlling at least one of reading and writing of data in the storage unit 1002 and the auxiliary storage unit 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage unit 1002 from at least one of the auxiliary storage unit 1003 and the communication unit 1004, and thus, executes various processings. A program for allowing a computer to execute at least a part of the operation described in the embodiment described above is used as the program. For example, the control unit 140 of the base station apparatus 10 illustrated in Fig. 16 may be attained by a control program that is stored in the storage unit 1002 and is operated by the processor 1001. In addition, for example, the control unit 240 of the user terminal 20 illustrated in Fig. 17 may be attained by a control program that is stored in the storage unit 1002 and is operated by the processor 1001. It has been described that the various processings described above are executed by one processor 1001, but the processings may be simultaneously or sequentially executed by two or more processors 1001. The processor 1001 may be mounted on one or more chips. Note that, the program may be transmitted from a network through an electric communication line.

The storage unit 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage unit 1002 may be referred to as a register, a cache, a main memory (a main storage unit), and the like. The storage unit 1002 is capable of retaining a program (a program code) that can be executed in order to implement a communication method according to one embodiment of this disclosure, a software module, and the like.

The auxiliary storage unit 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disk), a smart card, a flash memory (for example, a card, a stick, a key drive), a floppy (Registered Trademark) disk, a magnetic strip, and the like. The auxiliary storage unit 1003 may be referred to as an auxiliary storage unit. The storage medium described above, for example, may be a database including at least one of the storage unit 1002 and the auxiliary storage unit 1003, a server, and a suitable medium.

The communication unit 1004 is hardware for performing communication with respect to the computer through at least one of a wire network and a radio network (a transmitting and receiving device), and for example, is also referred to as a network device, a network controller, a network card, a communication module, and the like. The communication unit 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication unit 1004. In the transmitting and receiving unit, the transmitting unit and the receiving unit are mounted by being physically or logically separated.

The input unit 1005 is an input device for receiving input from the outside (for example, a keyboard, a mouse, a microphone, a switch, a button, a sensor, and the like). The output unit 1006 is an output device for implementing output with respect to the outside (for example, a display, a speaker, an LED lamp, and the like). Note that, the input unit 1005 and the output unit 1006 may be integrally configured (for example, a touch panel).

In addition, each of the apparatuses such as the processor 1001 and the storage unit 1002 may be connected by the bus 1007 for performing communication with respect to information. The bus 1007 may be configured by using a single bus, or may be configured by using buses different for each of the apparatuses.

In addition, the base station apparatus 10 and the user terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station apparatus 10 and the user terminal 20 have been described by using a functional block diagram, but such an apparatus may be attained by hardware, software, or a combination thereof. Each of software that is operated by a processor of the base station apparatus 10 according to the embodiment of the invention and software that is operated by a processor of the user terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), future radio access (FRA), new radio (NR), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station apparatus 10 may be performed by an upper node, in accordance with a case. In a network provided with one or a plurality of network nodes including the base station apparatus 10, it is obvious that various operations that are performed in order for communication with respect to the user terminal 20 can be performed by at least one of the base station apparatus 10 and network nodes other than the base station apparatus 10 (for example, MME, S-GW, or the like is considered as the network node, but the network node is not limited thereto). In the above description, a case is exemplified in which the number of network nodes other than the base station apparatus 10 is 1, but a plurality of other network nodes may be combined (for example, the MME and the S-GW).

The information, the signal, or the like described in this disclosure can be output to a lower layer (or the higher layer) from the higher layer (or the lower layer) . The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding information. For example, a radio resource may be indicated by an index.

The names used in the parameters described above are not a limited name in any respect. Further, expressions or the like using such parameters may be different from those explicitly disclosed in this disclosure. Various channels (for example, PUSCH, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station apparatus", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macrocell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication unit, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station apparatus in this disclosure may be replaced with the user terminal. For example, each aspect/embodiment of this disclosure may be applied to a configuration in which communication between the base station apparatus and the user terminal is replaced with communication in a plurality of user terminals 20 (for example, may be referred to as device-to-device (D2D), vehicle-to-everything (V2X), and the like). In this case, the function of the base station apparatus 10 described above may be provided in the user terminal 20. In addition, the words "up", "down", and the like may be replaced with words corresponding to the communication between the terminals (for example, "side"). For example, an uplink channel, a downlink channel, and the like may be replaced with a side channel.

Similarly, the user terminal in this disclosure may be replaced with the base station apparatus. In this case, the function of the user terminal described above may be provided in the base station apparatus.

The terms "determining" and "determining" used in this disclosure may involve diverse operations. "Determining" and "determining", for example, are capable of including "determining" and "determining" with respect to judging, calculating, computing, processing, deriving, investigating, looking up (search, inquiry) (for example, looking up in a table, a database, or another data structure), and ascertaining, and the like. In addition, "determining" and "determining" are capable of including "determining" and "determining" with respect to receiving (for example, receiving information), transmitting (for example, transmitting information), input, output, and accessing (for example, accessing data in a memory), and the like. In addition, "determining" and "determining" are capable of including "determining" and "determining" with respect to resolving, selecting, choosing, establishing, comparing, and the like. That is, "determining" and "determining" are capable of including "determining" and "determining" with respect to any operation. In addition, "determining (determining)" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical couple or connection, may be logical couple or connection, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot on the basis of a standard to be applied.

The description "on the basis of" that is used in this disclosure does not indicate "only on the basis of", unless otherwise specified. In other words, the description "on the basis of" indicates both "only on the basis of" and "at least on the basis of".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time unit greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time unit at the time of transmitting a signal. Other designations respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, unit representing TTI may be referred to as a slot, a mini slot, and the like, but not a subframe. Also, one slot may be called a unit time. The unit time may be different in each cell according to numerology.

Here, TTI, for example, indicates minimum time unit of scheduling in radio communication. For example, in an LTE system, the base station performs scheduling for allocating a radio resource (a frequency bandwidth, transmission power, and the like that can be used in each of the user terminals 20) in TTI unit, with respect to each of the terminals 20. Note that, the definition of TTI is not limited thereto.

TTI may be transmission time unit of a data packet (a transport block), a code block, a codeword, and the like that are subjected to channel coding, or may be processing unit of scheduling, link adaptation, and the like. Note that, when TTI is applied, a time zone in which the transport block, the code block, the codeword, and the like are actually mapped (for example, the number of symbols) may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a common TTI (TTI in LTE Rel.8-12), a normal TTI, a long TTI, a common subframe, a normal subframe, a long subframe, a slot, and the like. TTI shorter than the common TTI may be referred to as a shortened TTI, a short TTI, a partial TTI (or a fractional TTI), a shortened subframe, a short subframe, a mini slot, a subslot, a slot, and the like.

Note that, the long TTI (for example, the common TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined on the basis of the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, a RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it may not assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are in the plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

In the present disclosure, the SS block or CSI-RS is an example of a synchronization signal or reference signal.

As described above, this disclosure has been described in detail, but it is obvious for a person skilled in the art that this disclosure is not limited to the embodiment described in this disclosure. This disclosure can be implemented as corrected and changed modes without departing from the spirit and scope of this disclosure defined by the description of the claims. Therefore, the description in this disclosure is for illustrative purposes and does not have any limiting meaning with respect to this disclosure.

### EXPLANATIONS OF LETTERS OR NUMERALS

- 10: BASE STATION APPARATUS
- 110: TRANSMISSION UNIT
- 120: RECEPTION UNIT
- 130: SETTING UNIT
- 140: CONTROL UNIT
- 20: USER TERMINAL
- 210: TRANSMISSION UNIT
- 220: RECEPTION UNIT
- 230: SETTING UNIT
- 240: CONTROL UNIT
- 1001: PROCESSOR
- 1002: STORAGE UNIT
- 1003: AUXILIARY STORAGE UNIT
- 1004: COMMUNICATION UNIT
- 1005: INPUT UNIT
- 1006: OUTPUT UNIT

## Claims

1. A terminal comprising:
a reception unit configured to receive, from a base station apparatus, configuration information, indicating that scheduling is performed from a second cell to a first cell, of cross carrier scheduling for the first cell,
wherein the reception unit monitors a PDCCH of the first cell and a PDCCH of the second cell.

2. The terminal as claimed in claim 1,
wherein, in a time interval of a slot, when the reception unit receives a PDCCH in the first cell and receives a PDCCH in the second cell, the reception unit
decodes the PDCCH received in the first cell,
decodes the PDCCH received in the second cell,
decodes both of the PDCCH received in the first cell and the PDCCH received in the second cell,
determines a PDCCH to decode based on a time resource amount of the PDCCH or
decodes a PDCCH received earlier or a PDCCH received later among the PDCCH received in the first cell and the PDCCH received in the second cell.

3. The terminal as claimed in claim 1,
wherein the reception unit
does not decode the PDCCH received in the first cell but decodes the PDCCH received in the second cell from when receiving the PDCCH in the first cell until a time of a number of slots elapses, or
does not decode the PDCCH received in the second cell but decodes the PDCCH received in the first cell from when receiving the PDCCH in the second cell until a time of a number of slots elapses.

4. The terminal as claimed in any one of claims 1 to 3,
wherein the reception unit monitors a PDCCH of a type specified or configured as a type of a PDCCH to monitor in each of the first cell and the second cell.

5. A base station apparatus comprising:
a transmission unit configured to transmit, to a terminal, configuration information, indicating that scheduling is performed from a second cell to a first cell, of cross carrier scheduling for the first cell,
wherein the transmission unit
transmits a PDCCH for performing scheduling for the first cell in the first cell,
transmits a PDCCH for performing scheduling for the first cell in the second cell, or
transmits a PDCCH for performing scheduling for the first cell in the first cell, and transmits a PDCCH for performing scheduling for the first cell in the second cell.

6. A reception method executed by a terminal, the method comprising:
receiving, from a base station apparatus, configuration information, indicating that scheduling is performed from a second cell to a first cell, of cross carrier scheduling for the first cell, and
monitoring a PDCCH of the first cell and a PDCCH of the second cell.
